# EUROPEAN PATENT APPLICATION

(11) **EP 1 764 668 A1**
(43) Date of publication of application: **21.03.2007**
(21) Application number: 04746339.3
(22) Date of filing: 24.06.2004
(51) Int. Cl.: G06F 1/00, G06F 9/06

(54) **COMPUTER ACTIVATING METHOD, PROGRAM, RECORDING MEDIUM, AND INFORMATION PROCESSING APPARATUS**

(71) Applicant: Fujitsu Ltd., Kawasaki-shi, Kanagawa 211-8588 (JP)
(72) Inventor: OURA, Shigeaki c/o FUJITSU LIMITED 1-1,, Kawasaki-shi, Kanagawa 2118588 (JP)
(74) Representative: Gibbs, Christopher Stephen
(86) International application number: PCT/JP2004/008870
(87) International publication number: WO 2006/001050

(57) **Abstract**

A startup method of a computer which sequentially reads an OS, drivers, and applications stored in an external storage device and deploys them in a memory in a startup is provided. In a first startup, the contents of the memory at the point when the drivers are read and deployed in the memory subsequent to the OS are saved as a system file in the external storage device. In a startup after, the system file is saved in the external storage device, after the system file is read from the external storage device and deployed in the memory, the applications are read and collectively deployed in the memory, so as to perform a high-speed startup.

## Description

### Technical Field

The present invention relates to a computer startup method, a program, a storage medium, and an information processing apparatus which read an OS, drivers, and applications from a hard disk and deploy them in a memory; and particularly relates to a computer startup method, a program, a storage medium, and an information processing apparatus which shorten the startup time from power-on until applications become executable.

### Background Art

Recently, functions of a personal computer are extended, and the files read to memories upon startup of the personal computer are massive. Therefore, the startup time of the personal computer is tend to be increased.

In the case in which use of the personal computer is to be terminated, when it is caused to be in a standby or hibernation state instead of shutting it down as a method which shortens the startup time, the startup in the next usage of the personal computer can be omitted. This method will be described below.

When a personal computer is started up, an OS and drivers including environment information such as application link information and desktop environment information in a hard disk are deployed to a memory. In this course, since many files of the OS and the drivers are individually loaded to a memory, it takes a long time.

Thereafter, the applications are deployed to the memory. Immediately after the startup, initial processes of applications such as mail checking and virus checking are performed, and the startup of the personal computer is completed. When use of the personal computer is terminated, for example, it is caused to be in a hibernation state instead of shutting it down. Thus, the memory state at the termination is saved as a system file in a hard disk drive.

When the personal computer is to be used next time, the system file which is saved in the hard disk and is the memory state at the termination is collectively read and deployed to the memory; thus, the time until startup completion can be shortened.

In addition, as another conventional method which shortens the startup time, the state of the memory immediately after startup of the personal computer can be achieved in a short time by saving the memory state immediately after the personal computer is started up as a file in a hard disk and restoring the file in the memory upon usage of the personal computer.

This method will next be described. When the personal computer is started up, an OS and drivers including environment information such as application link information and desktop environment information in the hard disk are deployed to the memory. In this course, since many files of the OS and the drivers are individually loaded to the memory, it takes a long time.

Thereafter, the applications are deployed to the memory. Immediately after the startup, initial processes of applications such as mail checking and virus checking are performed, and the startup of the personal computer is completed. The memory state when the startup is completed is saved in the hard disk as a system file.

When the personal computer is to be started up next time, the system file which is saved in the hard disk and is the memory state at the time of startup completion is collectively deployed to the memory. Thus, the time until startup completion of the personal computer can be shortened.
Patent Document 1: Japanese Patent Application Laid-Open (kokai) No. 1998-293682
Patent Document 2: Japanese Patent Application Laid-Open (kokai) No. 1999-184703
Patent Document 3: 1999-039143

However, in the method which shortens the startup time by causing the computer to be in the standby or hibernation state instead of shutting it down, the personal computer has many unstable factors; and, when the personal computer is continuously used without shutting it down, unexpected errors and hang-up frequently occur.

On the other hand, in the method which saves the memory state immediately after the personal computer is started up, restores it in the memory every time in startup, and begins using it as the memory state immediately after startup, the unstable factors of the case in which it is caused to be in a standby or hibernation state without shutting it down can be avoided; however, the processes such as checking of virus pattern files which have been performed immediately before startup in every startup and the processes such as mail checking which are registered in startup and to be performed in every startup may not be executed.

### Disclosure of Invention

It is an object of the present invention to provide a computer startup method, a program, a storage medium, and an information processing apparatus which shortens the startup time by restoring a saved memory state upon startup without impairing the functions of applications which are performed immediately after startup or in every startup.

The present invention is a startup method of a computer which sequentially reads an OS, a driver, and an application stored in an external storage device and deploys the OS, the driver, and the application in a memory in a startup, the computer startup method characterized by comprising
a file saving step of saving the contents of the memory at the point when the driver is read and deployed in the memory subsequent to the OS in the external storage device as a system file; and
a high-speed startup step of, in a startup after the system file is saved in the external storage device, reading the system file from the external storage device and deploying the system file in the memory, and then reading the application and deploying the application in the memory.

Furthermore, the computer startup method of the present invention is characterized by comprising a file updating step in which, when a change in a system environment is determined in the startup after the system file is saved in the external storage device, the memory contents at the point when the OS, the driver, and the application stored in the external storage device are sequentially read and deployed in the memory in the startup are saved as a system file in the external storage device and updated. Herein, the change in the system environment is, for example, addition or deletion of an application or install or uninstall of a driver.

In the file saving step, when the OS and the driver are to be read and deployed in the memory, the OS and the drivers deployed in the memory based on a memory control table in which start addresses and end addresses are registered are saved as a system file in the external storage device. In the high-speed startup step, the system file of the external storage device is read based on the memory control table and deployed in the memory.

In the file saving step, merely the deployed area of the OS and the driver in the memory is saved in the external storage device as a system file. In the file saving step, the entire area of the memory including the OS and the driver may be saved in the external storage device as a system file.

The present invention provides a program for shortening the startup time. The program of the present invention is characterized by causing a computer which sequentially reads an OS, a driver, and an application stored in an external storage device and deploys the OS, the driver, and the application in a memory in a startup to execute a file saving step of saving the contents of the memory at the point when the driver is read and deployed in the memory subsequent to the OS in the external storage device as a system file; and a high-speed startup step of, in a startup after the system file is saved in the external storage device, reading the system file from the external storage device and deploying the system file in the memory, and then reading the application and deploying the application in the memory.

The program of the present invention is characterized by further executing a file updating step in which, when a change in a system environment is determined in the startup after the system file is saved in the external storage device, the memory contents at the point when the OS, the driver, and the application stored in the external storage device are sequentially read and deployed in the memory in the startup are saved as a system file in the external storage device and updated.

The present invention provides a program for shortening the startup time. The program of the present invention causes a computer which sequentially reads an OS, a driver, and an application stored in an external storage device and deploys the OS, the driver, and the application in a memory in a startup to execute a file saving step of saving the contents of the memory at the point when the driver is read and deployed in the memory subsequent to the OS in the external storage device as a system file; and a high-speed startup step of, in a startup after the system file is saved in the external storage device, reading the system file from the external storage device and deploying the system file in the memory, and then reading the application and deploying the application in the memory.

The program of the present invention is characterized by further executing a file updating step in which, when a change in a system environment is determined in the startup after the system file is saved in the external storage device, the memory contents at the point when the OS, the driver, and the application stored in the external storage device are sequentially read and deployed in the memory in the startup are saved as a system file in the external storage device and updated.

The present invention provides an information processing apparatus for shortening the startup time. The present invention is an information processing apparatus which sequentially reads an os, a driver, and an application stored in an external storage device and deploys the OS, the driver, and the application in a memory in a startup, the information processing apparatus characterized by having a file saving unit which saves the contents of the memory at the point when the driver is read and deployed in the memory subsequent to the OS in the external storage device as a system file; and a high-speed startup unit which, in a startup after the system file is saved in the external storage device, reads the system file from the external storage device and deploys the system file in the memory, and then reads the application and deploys the application in the memory.

Furthermore, the information processing apparatus of the present invention is characterized by providing a file updating unit which, when a change in a system environment is determined in the startup after the system file is saved in the external storage device, saves and updates the memory contents as a system file in the external storage device at the point when the OS, the driver, and the application stored in the external storage device are sequentially read and deployed in the memory in the startup.

Note that details of the program, storage medium, and information processing apparatus in the present invention are basically same as the computer startup method.

According to the present invention, the part which has the same memory contents every time in a personal computer startup and includes an OS and drivers is saved as a system file in an external storage device, and, in a startup thereafter, the system file is collectively read from the external storage device and deployed in the memory; thus, the startup time of the personal computer can be significantly shortened.

The personal computer is shut down when usage thereof is finished; therefore, occurrence of unexpected errors and hang-up which are caused when the personal computer is continued to be used without shutting it down can be reliably prevented.

Furthermore, as a system file, the memory state immediately after the OS and the drivers are deployed in a startup of the personal computer is saved as a system file, and the applications deployed thereafter are not included in the system file; therefore, the processes such as checking of virus pattern files which are performed immediately before startup in every startup and the processes such as mail checking which are registered in startup and to be performed in every startup can be executed every time by reading and deploying the applications after the system file is read from the external storage device and collectively deployed in the memory.

### Brief Description of Drawings

FIG. 1 is a block diagram of a functional configuration of a computer startup process according to the present invention;
FIG. 2 is an explanatory diagram of a hardware environment of a computer to which the present invention is applied;
FIG. 3 is an explanatory diagram of memory deployment of an OS and drivers in a startup;
FIG. 4 is an explanatory diagram of the memory control table of FIG. 3;
FIG. 5 is an explanatory diagram of a process in which the state of a memory in which the OS and drivers are deployed is saved as a system file in a hard disk drive;
FIG. 6 is an explanatory diagram of memory deployment of applications performed subsequent to FIG. 5;
FIG. 7 is an explanatory diagram of the state in which the system file is saved in the hard disk drive and high-speed startup is enabled according to the present invention;
FIG. 8 is an explanatory diagram of memory deployment of the system file in the case of startup from the state of FIG. 7;
FIG. 9 is a flow chart of a startup process according to the present invention; and
FIGs. 10A and 10B are flow charts of a startup process of the present invention in which Windows (R) XP is employed as an example.

### Best Mode for Carrying Out the Invention

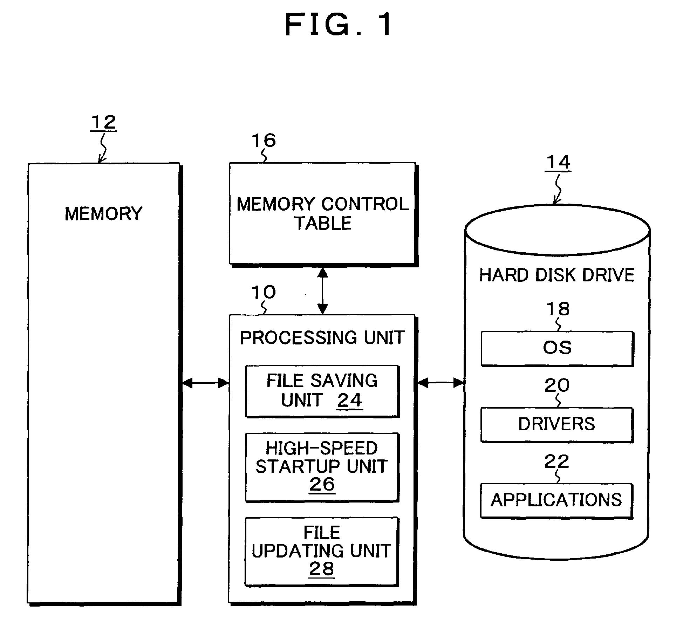

FIG. 1 is a block diagram of a functional configuration of a computer startup process according to the present invention. In FIG. 1, a computer which is an object of the present invention has a processing unit 10, a memory 12, a hard disk drive 14 serving as an external storage device, and a memory control table 16. In the hard disk drive 14, an OS 18, drivers 20, and applications 22 are stored.

In the processing unit 10, functions serving as a file saving unit 24, a high-speed startup unit 26, and a file updating unit 28 are provided. Upon startup which is caused by power-on, the processing unit 10 sequentially reads the OS 18, the drivers 20, and the applications 22 stored in the hard disk drive 14 and deploys them in the memory 12, thereby completing the startup process.

In addition to such basic functions of the startup process that the computer apparatus of the present invention has, at the point when the drivers 20 are read subsequent to the OS 18 and deployed in the memory 12, the file saving unit 24 saves the state of the memory 12 at that point as a system file in the hard disk drive 14.

The high-speed startup unit 26 reads the system file of the hard disk drive 14, which saves, in the hard disk drive 14, the OS 18 and the drivers 20 in the state that they are deployed in the memory 12, deploys the system file in the memory 12, and then reads the applications 22 and deploys the applications in the memory 12.

When the file updating unit 28 determines a change in the system environment when the system file saved in the hard disk drive 14 is to be read by the high-speed startup unit 26 and deployed in the memory 12, the system file saved in the hard disk drive 14 has to be re-created; therefore, the file updating unit saves the memory state at the point when the OS 18 and the drivers 20 stored in the hard disk drive 14 are sequentially read and deployed in the memory 12 as a system file in the hard disk drive 14, thereby updating the already saved system file.

In this case, a change in the system environment is determined by the file updating unit 28 for example when an application is added or deleted or when a driver is installed or uninstalled during usage until the previous time.

The reading/deployment and file saving between the hard disk 14 and the memory 12 by the file saving unit 24, the high-speed startup unit 26, and the file updating unit 28 are performed based on the memory control table 16. In the memory control table 16, start addresses and end addresses in the memory 12 are registered separately for the types of the OS, drivers, and applications.

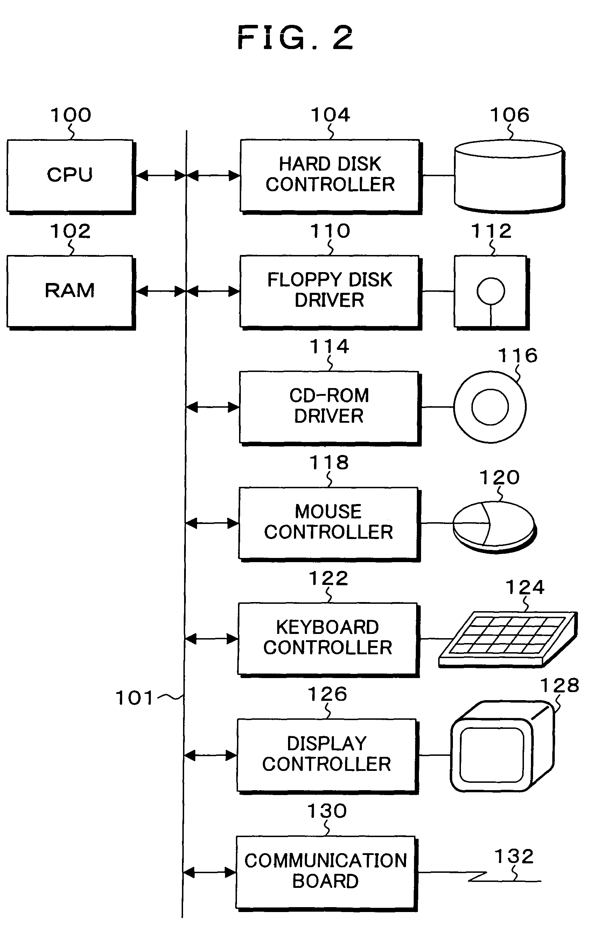

The processing functions of FIG. 1 are realized by, for example, hardware resources of a computer as shown in FIG. 2. In the computer of FIG. 2, to a bus 101 of a CPU 100, a RAM 102 which is used as a memory, a hard disk controller (software) 104, a floppy disk driver (software) 110, a CD-ROM driver (software) 114, a mouse controller 118, a keyboard controller 122, a display controller 126, and a communication board 130 are connected.

The hard disk controller 104 connects to a hard disk drive 106 and loads a program which executes the startup process of the present invention; and, upon startup of the computer, the hard disk controller invokes necessary programs from the hard disk drive 106, deploys them in the RAM 102, and executes them by the CPU 100.

A floppy disk drive (hardware) 112 is connected to the floppy disk driver 110, and read and write from and to a floppy disk (R) can be performed. A CD drive (hardware) 116 is connected to the CD-ROM driver 114, and data and programs stored in a CD can be read.

The mouse controller 118 transmits the input operations of a mouse 120 to the CPU 100. The keyboard controller 122 transmits the input operations of a keyboard to the CPU 100. The display controller 126 performs display with respect to a display unit 128.

The communication board 130 uses a communication line 132 including wireless transmission and performs communications with apparatuses in a network via a LAN and apparatuses on the outside internet.

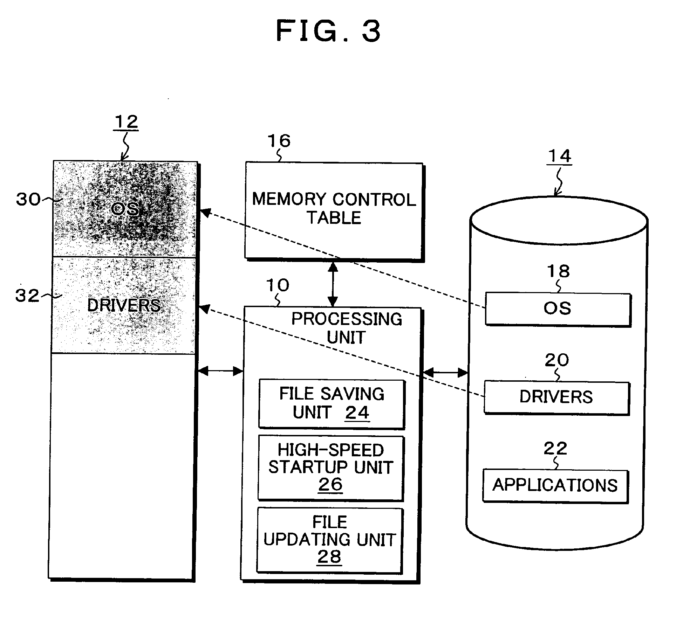

FIG. 3 is an explanatory diagram of memory deployment of an OS and drivers upon startup in FIG. 1. In FIG. 3, when power-on of the computer causes a startup process to start, the processing unit 10 reads the OS 18 of the hard disk drive 14 and deploys it in a memory area 30 in the memory 12. Subsequently, the processing unit 10 reads the drivers 20 of the hard disk drive 14 and deploys them in an area 32 of the memory 12.

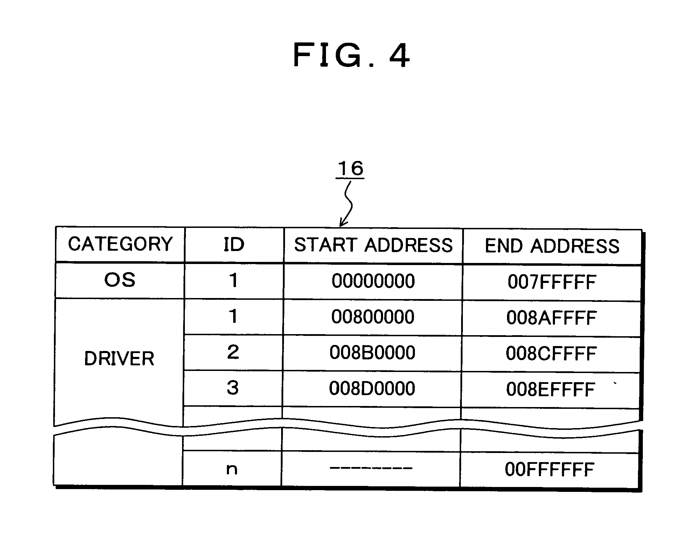

FIG. 4 is an explanatory diagram of the memory control table 16 in the state in which the OS and the drivers of FIG. 3 are deployed.

The memory control table 16 has items of categories, IDs, start addresses, and end addresses; a start address and an end address are registered therein for the OS; and, subsequent to that, start addresses and end addresses of the drivers are registered therein respectively for IDs 1 to n of the drivers.

Therefore, the processing unit 10 can determine them by referencing the memory control table 16.

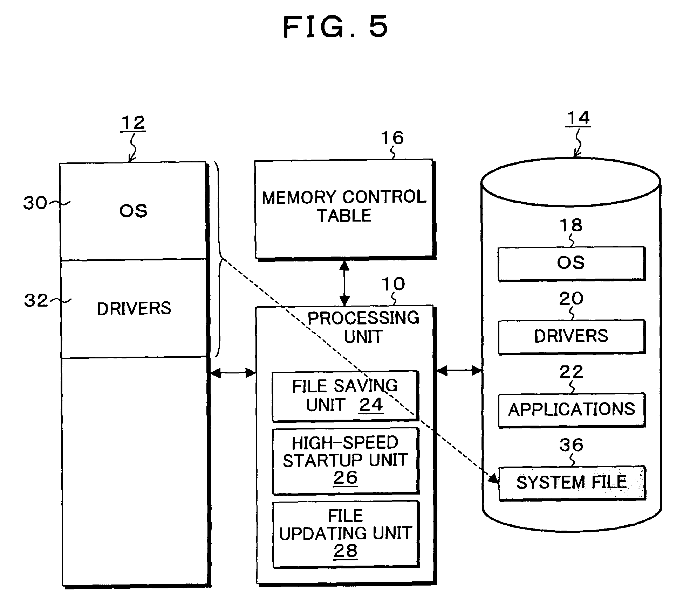

FIG. 5 is an explanatory diagram of a process in which the state of the memory 12 in which the OS and the drivers are deployed is saved in the hard disk drive 14 as a system file 36. This process is performed by the file saving unit 24 provided in the processing unit 10, wherein the file saving unit 24 references the memory control table 16 of FIG. 4 at the point when deployment of the drivers to the area 32 of an area 323 of the memory 12 is finished so as to read the memory state of the areas 30 and 32 of the memory 12, and saves it as the system file 36 in the hard disk drive 14.

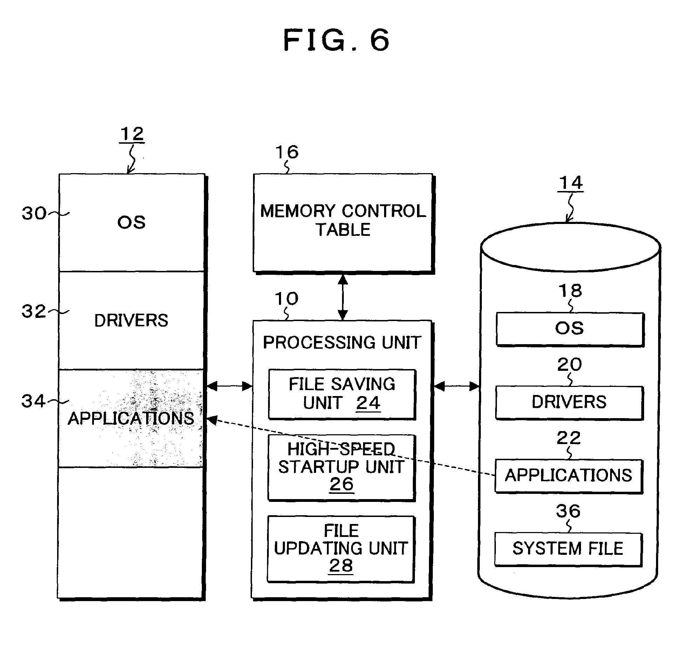

FIG. 6 is an explanatory diagram of the deployment of the applications 22 to the memory 12 which is performed subsequent to FIG. 5. When the applications 22 are deployed in an area 34 of the memory 12, processes such as checking of virus patterns performed in every startup and mail checking which is registered in startup and performed in every startup are executed as initial processes, and the state in which the applications are executable in response to processing requests from a user is achieved.

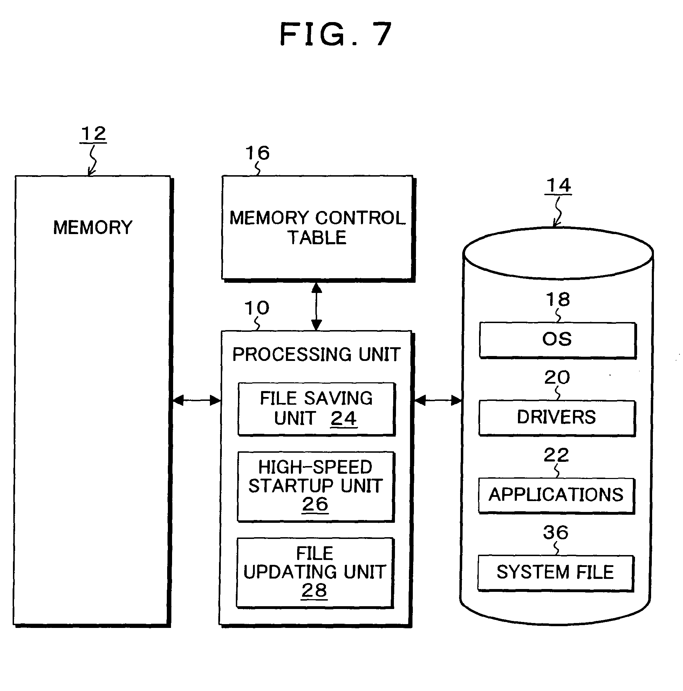

FIG. 7 is an explanatory diagram of the computer in which the system file 36 is saved in the hard disk drive 14 and which became a high-speed startup enabled state according to the present invention. When the state in which the system file 36 is saved in the hard disk drive 14 of FIG. 7 is achieved, in a startup thereafter, high-speed startup by the high-speed startup unit 26 provided in the processing unit 10 is always enabled.

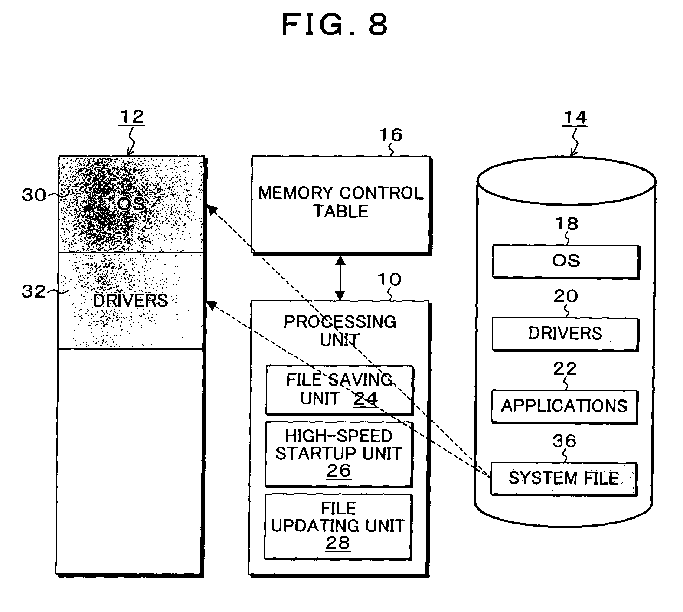

FIG. 8 is an explanatory diagram of memory deployment of the system file in the case in which it is started up from the state of FIG. 7. In FIG. 8, when the power of the computer is turned on in this state, the high-speed startup unit 26 of the processing unit 10 is activated, checks whether the system file 36 is saved in the hard disk drive 14 or not, and, since the system file 36 is saved therein, reads and deploys the system file 36 in the memory 12, thereby deploying the OS and the drivers in the areas 30 and 32.

Therefore, the process of reading the OS 18 and the drivers 20 from the hard disk drive 14 and sequentially deploying them in the memory 12 becomes unnecessary; thus, the processing time until startup completion can be significantly reduced. When the OS and the drivers are deployed in the memory 12 through reading of the system file 36, as well as a normal startup, the processing unit 10 reads the applications 22 from the hard disk drive 14, deploys the applications in the area 34 as shown in FIG. 6, executes the initial processes such as checking of virus pattern files and mail checking, and then generates the state in which the applications are executable according to instructions of a user.

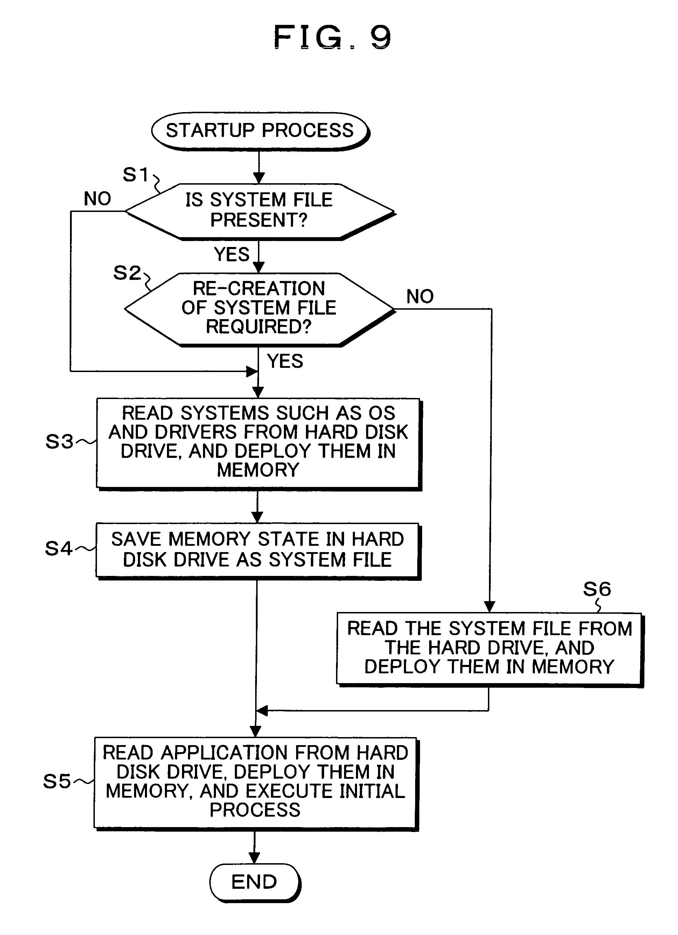

FIG. 9 is a flow chart of the computer startup process according to the present invention. In FIG. 9, when a startup caused by power-on of the computer is performed, whether the system file 36 is present in the hard disk drive 14 or not is checked in step S1.

Since the system file is not present in a first computer startup, the process proceeds to step S3, in which systems such as the OS 18 and the drivers 20 are read from the hard disk drive 14 and deployed in the memory 12. Subsequently, in step S4, the state of the memory 12 in which the systems such as the OS and the drivers are deployed is saved in the hard disk drive 14 as the system file 36.

Then, in step S5, the applications 22 are read from the hard disk drive 14 and deployed in the memory 12, the initial processes are executed, and the series of the startup processes are completed. On the other hand, in a startup of the computer in a second time or later, it is determined in step S1 that the system file is present in the hard disk drive 14, and the process proceeds to step S2, in which whether re-creation of the system file is required or not is checked.

When an environmental change such as addition or deletion of an application or install or uninstall of a driver is not performed in previous processes, the re-creation is not required. Therefore, the process proceeds to step S6 in which the system file 36 is read from the hard disk drive 14 and deployed in the memory 12, and the applications 22 are read and deployed to execute the initial processes in step S5; thus, the startup process is completed at a high speed.

When the system environment is changed, for example, because of addition or deletion of an application or install or uninstall of a driver, and the re-creation is required in step S2, the process proceeds to step S3, in which, as well as the first-time startup, the OS 18 and the drivers 20 are read from the hard disk drive 14 and deployed in the memory 12. At this point of time, in the manner of step S4, the state of the memory 12 is saved in the hard disk drive 14 as a system file 36, and the previously-saved system file 36 is updated.

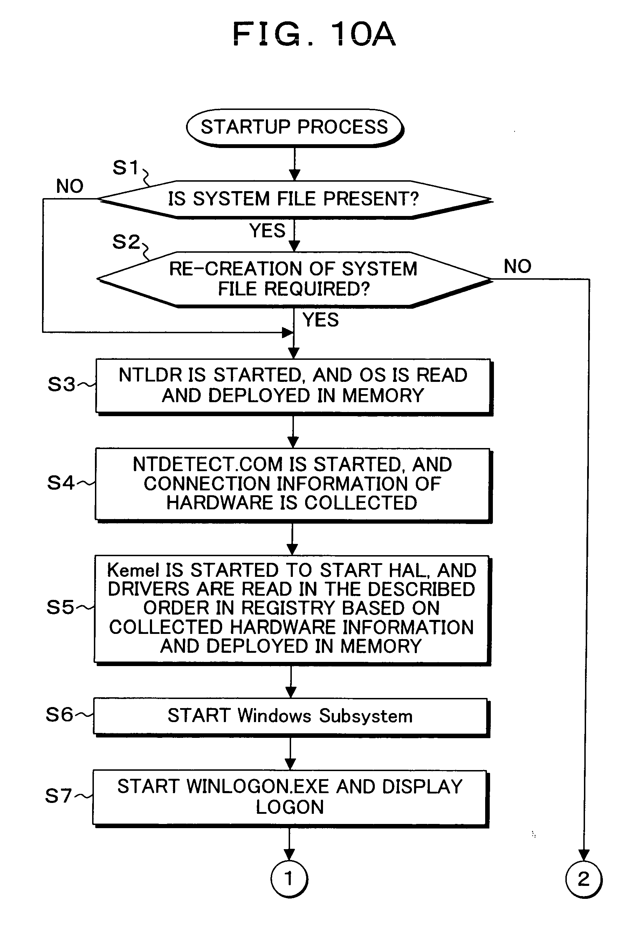

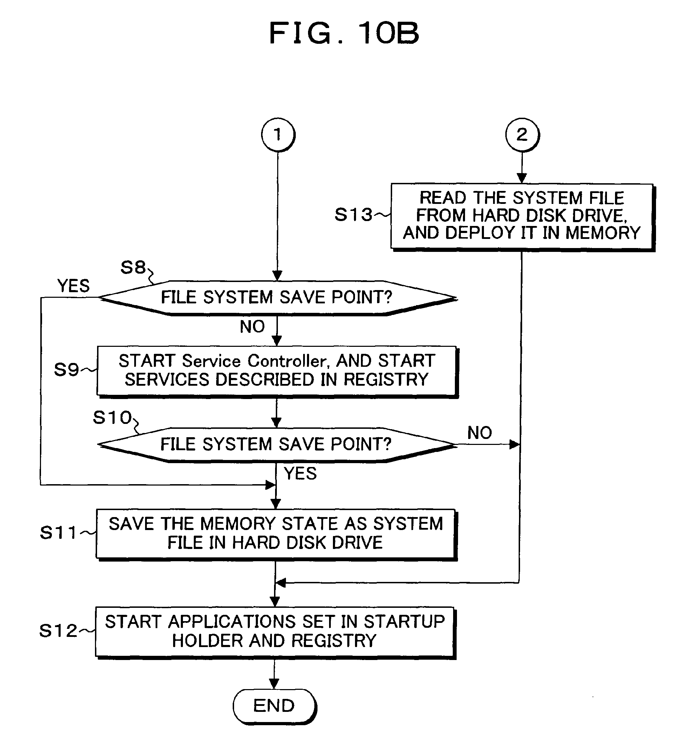

FIGs. 10A and 10B are flow charts of a computer startup process according to the present invention wherein Windows (R) XP is taken as an example. In FIGs. 10A and 10B, when the computer is started up, whether the system file 36 is present in the hard disk drive 14 or not is checked in step S1.

Since the system file is not present in a first-time startup, the process proceeds to step S3, in which NTLDR (Operating system loader) in Windows (R) XP is started to read the OS, and deploys it in the memory 12. Subsequently, in step S4, NTDETECT.COM is started to collect connection information of the hardware in the computer.

Subsequently, in step S5, Kernel is started to start HAL (Hardware Abstraction Layer), and, based on the hardware information collected in step S4, the drivers are read in the described order in a registry and deployed in the memory 12. Herein, the drivers deployed in the memory 12 include, for example, those of keyboard, video, audio, COM, LPT, and network.

The registry is described as "HKEY_LOCAL_MACHINE¥SYSTEM¥CurrentControlSe t¥Control¥ServiceGroupOrder:List".

Next, Windows (R) subsystem is started in step S6. When Windows (R) Subsystem is started, WINLOGON.EXE is started in step S7, and a logon display is shown in a display.

In Windows (R) XP, a plurality of users are displayed to enable selective logon in the logon display; therefore, when the computer is used in the manner that it is used by a plurality of users, a system file is created at the point of the logon display.

More specifically, when the logon display is shown in step S7, whether it is a file system save point or not is checked in step S8. When it is to be used by a plurality of users, it is determined to be a save point, and the process proceeds to step S11, in which the state of the memory 12 at this point is saved in the hard disk drive 14 as the system file 36.

On the other hand, when it is to be used by a single user, the save point in step S8 is skipped, and the process proceeds to step S9, in which a service controller is started, and the services described in the registry are started.

The description of the registry in this case is
"HKEY_LOCAL_MACHINE¥SYSTEM¥CurrentControlSe t¥Control¥Services",
and the services therein of which "Start" is 0x2 (execute) are to be used.

Examples of the services to be started include
PowerUtility,
Schedule,
SBRLLA For FM Advisor,
Task Scheduler,
Print Spooler, and
Automatic Updates.

Subsequently, in step S10, whether it is a save point of the file system or not is determined. This save point is for the case in which the logon is desired to be omitted in the next startup for example in the case in which the computer is used by an individual.

When this save point is determined, in step S11, the state of the memory 12 in which the services are started in step S9 is saved in the hard disk drive 14 as the system file 36.

Finally, in step S12, applications set in a startup holder and a registry are started, and the series of the startup processes is completed. The registry in this case is described as
HKEY_LOCAL_MACHINE¥SOFTWARE¥Microsoft¥Windo ws¥CurrentVersion¥Run
HKEY_CURRENT_USER¥SOFTWARE¥Microsoft¥Window s¥CurrentVersion¥Run,
and the applications set in the registry are, for example,
IME, Windows Messenger (R), Indicator Utility, and Fujitsu Service Assistant.

The above described embodiment employed the case of Windows (R) XP as a specific example; however, in another arbitrary system having an OS and drivers, high-speed startup can be realized by saving the state of a memory in a hard disk drive as a system file at the point when OS drivers are deployed from a hard disk drive to a memory, and reading and deploying the system file in a memory from the next time.

In the above described embodiment, the addresses of the OS 18 and the drivers 20 deployed in the memory 12 are referenced according to the memory control table 16, merely the areas 30 and 32 in which the OS and the drivers are deployed in the memory 12 are read and saved as the system file 36 in the hard disk drive 14; however, the entire area of the memory 12 may be saved as the system file 36 without modification in the hard disk drive 14 at the point when the drivers 20 are deployed in the memory 12.

When the entire area of the memory 12 is saved in the above described manner as the system file 36 in the state in which the OS 18 and the drivers 20 are deployed, registration and control of the memory addresses of each of the OS 18 and the drivers 20 according to the memory control table 16 becomes unnecessary. Although there is a demerit that the size of the system file 36 stored in the hard disk drive 14 is increased, the memory control table 16 is simplified, and load can be reduced as a startup process.

The present invention includes arbitrary modifications that do not impair the object and advantages thereof and is not limited by the numerical values shown in the above described embodiments.

## Claims

1. A startup method of a computer which sequentially reads an OS, a driver, and an application stored in an external storage device and deploys the OS, the driver, and the application in a memory in a startup, the computer startup method **characterized by** comprising
a file saving step of saving the contents of the memory at the point when the driver is read and deployed in the memory subsequent to the OS in the external storage device as a system file; and
a high-speed startup step of, in a startup after the system file is saved in the external storage device, reading the system file from the external storage device and deploying the system file in the memory, and then reading the application and deploying the application in the memory.

2. The computer startup method of claim 1, **characterized by** comprising a file updating step in which, when a change in a system environment is determined in the startup after the system file is saved in the external storage device, the memory contents at the point when the OS, the driver, and the application stored in the external storage device are sequentially read and deployed in the memory in the startup are saved as a system file in the external storage device and updated.

3. The computer startup method according to claim 1, **characterized in that** the change in the system environment includes addition or deletion of an application or install or uninstall of a driver.

4. The computer startup method according to claim 1, **characterized in that**,
in the file saving step, when the OS and the driver are to be read and deployed in the memory, the OS and the drivers deployed in the memory based on a memory control table in which start addresses and end addresses are registered are saved as a system file in the external storage device; and,
in the high-speed startup step, the system file of the external storage device is read based on the memory control table and deployed in the memory.

5. The computer startup method according to claim 1, **characterized in that**, in the file saving step, merely the deployed area of the OS and the driver in the memory is saved in the external storage device as a system file.

6. The computer startup method according to claim 1, **characterized in that**, in the file saving step, the entire area of the memory including the OS and the driver is saved in the external storage device as a system file.

7. A program **characterized by** causing a computer which sequentially reads an OS, a driver, and an application stored in an external storage device and deploys the OS, the driver, and the application in a memory in a startup to execute
a file saving step of saving the contents of the memory at the point when the driver is read and deployed in the memory subsequent to the OS in the external storage device as a system file; and
a high-speed startup step of, in a startup after the system file is saved in the external storage device, reading the system file from the external storage device and deploying the system file in the memory, and then reading the application and deploying the application in the memory.

8. The program according to claim 7, **characterized by** executing a file updating step in which, when a change in a system environment is determined in the startup after the system file is saved in the external storage device, the memory contents at the point when the OS, the driver, and the application stored in the external storage device are sequentially read and deployed in the memory in the startup are saved as a system file in the external storage device and updated.

9. The program according to claim 7, **characterized in that** the change in the system environment includes addition or deletion of an application or install or uninstall of a driver.

10. The program according to claim 7, **characterized in that**,
in the file saving step, when the OS and the driver are to be read and deployed in the memory, the OS and the drivers deployed in the memory based on a memory control table in which start addresses and end addresses are registered are saved as a system file in the external storage device; and,
in the high-speed startup step, the system file of the external storage device is read based on the memory control table and deployed in the memory.

11. The program according to claim 7, **characterized in that**, in the file saving step, merely the deployed area of the OS and the driver in the memory is saved in the external storage device as a system file.

12. The program according to claim 7, **characterized in that**, in the file saving step, the entire area of the memory including the OS and the driver is saved in the external storage device as a system file.

13. A computer-readable storage medium storing a program which causes a computer which sequentially reads an OS, a driver, and an application stored in an external storage device and deploys the OS, the driver, and the application in a memory in a startup to execute
a file saving step of saving the contents of the memory at the point when the driver is read and deployed in the memory subsequent to the OS in the external storage device as a system file; and
a high-speed startup step of, in a startup after the system file is saved in the external storage device, reading the system file from the external storage device and deploying the system file in the memory, and then reading the application and deploying the application in the memory.

14. The storage medium according to claim 13, **characterized in that** the program further executes a file updating step in which, when a change in a system environment is determined in the startup after the system file is saved in the external storage device, the memory contents at the point when the OS, the driver, and the application stored in the external storage device are sequentially read and deployed in the memory in the startup are saved as a system file in the external storage device and updated.

15. The storage medium according to claim 13, **characterized in that** the change in the system environment includes addition or deletion of an application or install or uninstall of a driver.

16. The storage medium according to claim 13, **characterized in that**,
in the file saving step, when the OS and the driver are to be read and deployed in the memory, the OS and the drivers deployed in the memory based on a memory control table in which start addresses and end addresses are registered are saved as a system file in the external storage device; and,
in the high-speed startup step, the system file of the external storage device is read based on the memory control table and deployed in the memory.

17. The storage medium according to claim 13, **characterized in that**, in the file saving step, merely the deployed area of the OS and the driver in the memory is saved in the external storage device as a system file.

18. The storage medium according to claim 13, **characterized in that**, in the file saving step, the entire area of the memory including the OS and the driver is saved in the external storage device as a system file.

19. An information processing apparatus which sequentially reads an OS, a driver, and an application stored in an external storage device and deploys the OS, the driver, and the application in a memory in a startup, the information processing apparatus **characterized by** comprising
a file saving unit which saves the contents of the memory at the point when the driver is read and deployed in the memory subsequent to the OS in the external storage device as a system file; and
a high-speed startup unit which, in a startup after the system file is saved in the external storage device, reads the system file from the external storage device and deploys the system file in the memory, and then reads the application and deploys the application in the memory.

20. The information processing apparatus according to claim 19, **characterized by** providing a file updating unit which, when a change in a system environment is determined in the startup after the system file is saved in the external storage device, saves and updates the memory contents as a system file in the external storage device at the point when the OS, the driver, and the application stored in the external storage device are sequentially read and deployed in the memory in the startup.
